(19) **Europäisches Patentamt**

**European Patent Office**

**Office européen des brevets**

(11) **EP 1 029 394 B1**

(12) **EUROPÄISCHE PATENTSCHRIFT**

(45) Veröffentlichungstag und Bekanntmachung des Hinweises auf die Patenterteilung:
**27.03.2002 Patentblatt 2002/13**

(21) Anmeldenummer: **99926453.4**

(22) Anmeldetag: **28.05.1999**

(51) Int Cl.$^7$: **H03K 3/84**, G06F 7/58

(86) Internationale Anmeldenummer:
**PCT/EP99/03689**

(87) Internationale Veröffentlichungsnummer:
**WO 99/66641 (23.12.1999 Gazette 1999/51)**

(54) **VERFAHREN ZUR ERZEUGUNG EINER ZUFALLSZAHL AUF QUANTENMECHANISCHER GRUNDLAGE UND ZUFALLSGENERATOR**

METHOD FOR GENERATING A RANDOM NUMBER ON A QUANTUM-MECHANICS BASIS AND RANDOM GENERATOR

PROCEDE POUR PRODUIRE UN NOMBRE ALEATOIRE SELON DES PRINCIPES DE MECANIQUE QUANTIQUE, ET GENERATEUR ALEATOIRE

(84) Benannte Vertragsstaaten:
**AT BE CH CY DE DK ES FI FR GB GR IE IT LI LU MC NL PT SE**

(30) Priorität: **16.06.1998 DE 19826802**

(43) Veröffentlichungstag der Anmeldung:
**23.08.2000 Patentblatt 2000/34**

(73) Patentinhaber: **Deutsche Telekom AG**
**53113 Bonn (DE)**

(72) Erfinder:
• **DULTZ, Wolfgang**
**D-65936 Frankfurt am Main (DE)**
• **DULTZ, Gisela**
**D-65936 Frankfurt am Main (DE)**
• **HILDEBRANDT, Eric**
**D-60487 Frankfurt am Main (DE)**
• **SCHMITZER, Heidrun**
**D-93051 Regensburg (DE)**

(56) Entgegenhaltungen:
**DE-A- 19 641 754**

• **RARITY J G ET AL: "QUANTUM RANDOM-NUMBER GENERATION AND KEY SHARING" JOURNAL OF MODERN OPTICS, Bd. 41, Nr. 12, 1. Dezember 1994 (1994-12-01), Seiten 2435-2444, XP002052913 in der Anmeldung erwähnt**

# EP 1 029 394 B1

## Beschreibung

### Technisches Gebiet:

Die Erfindung betrifft ein Verfahren zur Erzeugung einer Zufallszahl auf quantenmechanischer Grundlage und einen Zufallsgenerator, insbesondere zur Durchführung des Verfahrens, gemäß dem Oberbegriff von Anspruch 1 bzw. 5.

### Stand der Technik:

Binäre Zufallszahlen sind das Rückgrad vieler Verschlüsselungstechniken für den geheimen und sicheren Nachrichtenaustausch. Besonders bekannt geworden ist das einzige sichere Kryptographieverfahren, bei dem der Schlüssel aus einer zufälligen Reihe von binären Nullen und Einsen besteht, die so lange wie die binäre Nachricht selbst ist und die nur einmal verwendet wird ("one time pad" Verfahren). Ein Spion der z. B. alle möglichen Schlüssel durchprobiert, wird dabei zwar den richtigen Schlüssel irgendeinmal ebenfalls anwenden und die Nachricht damit entschlüsseln. Aber mit der gleichen Wahrscheinlichkeit erhält er auch alle denkbaren anderen möglichen Nachrichten der gleichen Länge und er vermag die richtige nicht herauszufinden, abgesehen davon, daß die Zahl der möglichen Schlüssel bei längeren Nachrichten astronomisch ist und jede Rechnerkapazität übersteigt.

Auch für wissenschaftliche und technische Zwecke (Monte Carlo Methode) aber besonders für das Glücksspiel werden Zufallszahlen gebraucht. Für Lottospiele und Spielautomaten ist die Qualität dieser Zahlen Grundlage für das Vertrauen der Spieler in die Einrichtung und damit Voraussetzung für ihren wirtschaftlichen Betrieb. Damit sind Kryptographie und Glücksspiel ganz wesentlich von der Qualität zufälliger Zahlenreihen abhängig.

Weiterhin gehört die vertrauenswürdige Erzeugung von Zufallszahlen zu den primären Aufgaben eines Unternehmens, daß sich mit der Nachrichtenübertragung beschäftigt.

Zur Erzeugung von Zufallszahlen werden bisher im wesentlichen zwei verschiedenartige Klassen von Verfahren angewendet:

Bei Algorithmischen Verfahren wird aus einer kurzen Anfangssequenz (seed) mit Hilfe mathematischer Operationen, die in Soft- oder in Hardware ausgeführt werden können, eine wesentlich längere pseudo-zufällige Sequenz erzeugt. Diese Pseudo-Zufallszahlen sind durch deterministische Prozesse im Rechner gewonnen worden und daher grundsätzlich nicht zufällig. Für viele Fälle, etwa zur Anwendung bei Simulationen nach der Monte Carlo Methode, genügen sie jedoch und haben sogar Vorteile, da sie wiederholt in gleicher Folge erzeugt werden können. Auf der Grundlage algorithmischer Verfahren ausgeführte Zufallsgeneratoren genügen jedoch häufig nicht den Anforderungen in der Kryptographie, da es bei der Erzeugung der Zufallszahl zu einer gewissen Anzahl von vorne herein unbrauchbarer Sequenzen (schwache Schlüssel) kommt und mit Korrelationen zwischen den Zufallszahlen zu rechnen ist.

Die zweite Klasse von Verfahren zur Erzeugung von Zufallszahlen sind physikalische Verfahren. Bei diesen nutzt man den statistischen Charakter bestimmter physikalischer Prozesse. Generell lassen die physikalischen Verfahren sich weiter unterteilen in

- Statistische Prozesse, die zwar deterministischen Bewegungsgleichungen gehorchen, aber aufgrund hoher Komplexität und der Unkenntnis des Anfangszustands nicht vorhersagbar sind. Zufallsgeneratoren auf dieser Basis sind etwa der Münzwurf "Kopf" oder "Zahl" oder Lottomaschinen. Diese Verfahren produzieren ein deterministisches Chaos, das als zufällig gelten kann, da die Anfangsbedingungen des Generators bei der Erzeugung jeder einzelnen Zufallszahl stets etwas voneinander abweichen, ohne daß diese Abweichung quantifizierbar wird.
- Fundamental zufällige Prozesse (Elementarprozesse), wie sie von der Quantenmechanik beschrieben werden. Sie sind nach dem heutigen Stand der Wissenschaft nicht auf hypothetische deterministische Mechanismen (verborgene Variablen) zurückzuführen und daher ihrer Natur nach grundsätzlich zufällig.

Bitfolgen, die durch physikalische Prozesse, speziell durch fundamental zufällige Quantenprozesse, erzeugt werden, kommen dem Konzept einer zufälligen Sequenz näher als algorithmisch generierte Folgen.

Der Zerfall radioaktiver Atome ist ein zufälliges Elementarereignis, das sich wegen der hohen Energie der entstehenden Teilchen gut detektieren läßt und zur Erzeugung einer Zufallszahl vorgeschlagen wurde (*M. Gude: Ein quasiidealer Gleichverteilungsgenerator basierend auf physikalischen Zufallsphänomenen, Dissertation RWTH Aachen*, *1987*). Nachteilig ist hierbei allerdings die potentiell schädliche Wirkung radioaktiver Strahlung auf den Menschen und auf empfindliche Elektronik.

Andere physikalische Zufallsgeneratoren benutzen physikalische Rauschquellen, wie z. B. das elektromagnetische Rauschen eines Widerstandes oder einer Diode, um zufällige Bitsequenzen zu erzeugen (z.B. *M. Richter: Ein Rauschgenerator zur Gewinnung von quasiidealen Zufallszahlen für die stochastische Simulation, Dissertation RWTH Aachen, 1992).* Bei diesen Verfahren ist es allerdings oft schwierig, die Entscheidungsschwelle zwischen Bitwert 1 und Bitwert 0 exakt und zeitlich unveränderlich einzustellen. Weiterhin können derartige Zufallsgeneratoren von außen dadurch manipuliert werden, daß dem Quantenrauschen ein willkürlich vorgegebenes "Rauschen" etwa durch Einstrahlung elektromagnetischer Wellen überlagert wird. Da die Trennung des Quantenrauschens von diesem fremdbestimmten Pseudorauschen nicht einfach ist, gelten diese Verfahren als nicht sicher.

Ein elementarer Zufallsprozeß, der quantenmechanisch sorgfältig untersucht wurde, ist die Wegwahl eines einzelnen Lichtquantes (Photons) an einem Strahlteiler: Es ist grundsätzlich zufällig, in welchen der Ausgangskanäle ein auf den Strahlteiler fallendes Photon überführt wird. Zur Erzeugung einer Zufallssequenz wird das Lichtquant beispielsweise an einem halbdurchlässigen Spiegel reflektiert oder transmittiert, wobei den Ausgangskanälen des Strahlteilers jeweils ein Detektor zugeordnet ist, der das Quant registriert und dessen Anzeige - je nach Detektor - den Bitwert 0 bzw. 1 der Zufallssequenz repräsentiert. Verfahren zur Erzeugung von Zufallszahlen auf optischer Grundlage und zur abhörsicheren Übertragung des Zufallscodes sind z.B. beschrieben in *J. G. Rarity et al.: Quantum randomnumber generation and key-sharing*, *J. Mod. Opt. 41, S. 2435 (1994).*

Problematisch bei den Verfahren zur Erzeugung einer Zufallssequenz auf der Grundlage der Einzelphotonenstatistik am optischen Strahlteiler sind jedoch Störimpulse der Detektoren, die etwa von Höhenstrahlung oder sonstige elektromagnetische Einwirkung von außen herrühren, und die geringe Ansprechwahrscheinlichkeit eines Detektors für Einzelphotonen.

Bisher gibt es keine Lichtquelle, die einzelne Photonen im gleichen zeitlichen Abstand erzeugt. Alle bisherigen Lichtquellen erzeugen die Photonen in einer zufälligen Zeitfolge, so daß nicht vorausgesehen werden kann, wann ein Photon auf den Strahlleiter des optischen Zufallsgenerators fällt. Dies und auch das Detektorrauschen führt zur Störimpulsen, die in die Bildung der Zufallssequenz einfließen. Zur Verringerung der Störeinflüsse durch Fremdeinwirkung ist aus der DE 196 41 754.6 bekannt, eine Zweiphotonenquelle als Lichtquelle zu verwenden, bei der die beiden Photonen eines Photonenpaars stets etwa gleichzeitig erzeugt werden. Die beiden Photonen werden räumlich getrennt, wobei das eine auf einen Triggerdetektor, das andere auf den Strahlleiter des optischen Zufallsgenerators fällt. Nur wenn der Trigger anspricht wird das Ansprechen der Detektoren des Zufallsgenerators registriert. Dadurch wird der Untergrund durch den Dunkelstrom der Detektoren reduziert und die Wahrscheinlichkeit erhöht, daß nur Ereignisse, die auf den zufallsgenerierenden Mechanismus am Strahlteiler zurückgehen, in die Zufallssequenz eingehen.

Grundsätzlich besteht jedoch noch das Problem der mangelnden Nachweiseffizienz für einzelne Photonen. Ein Nachteil bekannter optischer Zufallsgenerators ist durch die relativ geringe Quantenausbeute der Detektoren gegeben, die für das Zählen der einzelnen Photonen an den Ausgängen des Strahlteilers verwendet werden. Im besten Fall beträgt die Quantenausbeute $\gamma$ für Siliziumdetektoren $\gamma = 0,7$ bei ca. 700 nm, sinkt jedoch im interessanten Infrarotgebiet stark ab. Detektoren für das zweite und dritte optische Fenster der Telekommunikation haben oft eine Quantenausbeute von nur 0,1 bis 0,2, d. h. nur jedes fünfte bis jedes zehnte Photon, das auf den Detektor fällt, bringt ihn zum Ansprechen und führt zur Erzeugung eines Ausgangssignals und damit eines Bitwerts der Zufallssequenz. Für den Fall eines mit dem Zufallsgenerator gekoppelten Triggerdetektors nach der DE 196 41 754.6 hat die Ansprechwahrscheinlichkeit des Detektors besonders schwerwiegende Folgen hinsichtlich der Zählrate bzw. der Geschwindigkeit, mit welcher eine Zufallssequenz erzeugt werden kann. Denn da die Quantenausbeute für zwei getrennte Detektoren, die gleichzeitig ansprechen müssen, proportional $\gamma^2$ ist, ist die Zählrate gegenüber dem Fall ohne Trigger erheblich geringer.

In der DE 198 06 178.1 wurde vorgeschlagen, zur Erhöhung der Detektionswahrscheinlichkeit statt mit einem einzelnen Photon mit größeren Photonenraten zu arbeiten, z.B. von einer Laserdiode erzeugte Photonenschwärme aus n Photonen zu verwenden. Problematisch hierbei ist die Tatsache, daß alle Photonen des Photonenschwarms, die auf den Strahlteiler fallen in einen gemeinsamen Detektor gelangen müssen, der dann allerdings mit hoher Wahrscheinlichkeit anspricht. Die Wahrscheinlichkeit, daß alle Photonen in einen gemeinsamen Detektor gelangen, beträgt für zwei Photonen 1/2, so daß bereits bei einem Schwarm mit nur zwei Photonen in der Hälfte der Fälle kein verwertbares Zählereignis (Bitwert 0 oder 1 der zufälligen Sequenz) vorliegt.

Technische Aufgabe:

Der Erfindung liegt daher die Aufgabe zugrunde, ein Verfahren zur Erzeugung einer Zufallszahl auf quantenmechanischer Grundlage und einen Zufallsgenerator zur Verfügung zu stellen, bei welchem die Ansprechwahrscheinlichkeit der Detektoren erhöht ist und bei welchem möglichst viele der von der Teilchequelle abgegebenen Teilchen zu einem verwertbaren Zählereignis an einem der Detektoren führen, also die Zählwahrscheinlichkeit erhöht ist, und somit der schnelle und zuverlässige Aufbau einer Zufallssequenz möglich ist.

Offenbarung der Erfindung:

Die Aufgabe wird gelöst durch ein Verfahren sowie eine Vorrichtung gemäß Anspruch 1 bzw. 5, das durch die Erzeugung eines Mehrteilchenzustands im Ausgangskanal des Strahlteilers und damit durch mehrere auf den Detektor treffende Teilchen die Wahrscheinlichkeit für ein verwertbares Zählereignis je von der Quelle erzeugtem Mehrteilchenzustand deutlich erhöht. Denn fallen n Photonen innerhalb eines gewissen zeitlichen Fensters auf den Detektor mit der Ansprechwahrscheinlichkeit $\gamma$ für Einzelteilchen, so beträgt die n-Teilchen-Ansprechwahrscheinlichkeit $P_n$:

$$(1) \qquad P_n = 1 - (1-\gamma)^n$$

Die Ansprechwahrscheinlichkeit des einzelnen Detektors wird bei der Verwendung von Quantenpaaren von $\gamma$ auf $(1 - (1-\gamma)^2)$ verbessert. Für n = 2 und $\gamma$ = 0,7 spricht der Detektor also bereits in über 90 % der Fälle an. Für den Fall, daß Teilchenquellen für Anzahlzustände mit mehr als zwei Quanten zur Verfügung stehen, können die Ansprechwahrscheinlichkeiten weiter nach Gleichung (1) verbessert werden. Die im folgenden genauer beschriebene Erfindung erreicht zudem mit Hilfe einer Mehrteilchenquelle und einem Strahlteiler eine Zählwahrscheinlichkeit von eins, d. h. jedes Teilchenpaar der Quelle gelangt zu nur einem Detektor, keines wird am Strahlteiler aufgeteilt.

Ausgangspunkt der Erfindung ist die Zufallszahlerzeugung auf der Grundlage der Quantenstatistik einzelner Teilchen an einem Strahlteiler. Erfindungsgemäß wird zunächst ein Mehrteilchenzustand mit wenigstens zwei quantenmechanisch korrelierten Teilchen erzeugt, wobei die einzelnen Teilchen in wenigstens teilweise unterschiedliche Raumrichtungen emittiert werden und somit unterschiedliche Teilstrahlengänge durchlaufen.

Die Teilchen sind vorzugsweise Photonen. die z.B. aus einem optischen Kaskardenübergang oder aus parametrischer Fluoreszenz stammen. Vorteilhaft dazu ist eine Teilchenquelle, die eine Photonenpaarquelle ist, insbesondere ein nichtlinearer optischer Kristall in Verbindung mit einer Pumplichtquelle, z. B. einem Laser. Durch parametrische Konversion werden mit gewisser Wahrscheinlichkeit aus einem Pumpphoton zwei Fluoreszenzphotonen in einem quantenmechanisch verschränkten Zustand mit korrelierter Energie, Polarisation und definierter räumlicher Abstrahlungsverteilung erzeugt. Die parametrische Fluoreszenz ist für die Erfindung besonders geeignet, da die Photonen eines Photonenpaars in diesem Fall aufgrund der räumlichen Abstrahlungsverteilung leicht in die Teilstrahlengänge eingekoppelt werden können. Ebenso läßt sich vorhandene Hintergrundstrahlung, insbesondere das Pumplicht, durch räumliche Blenden oder Masken, spektrale Filter und Polarisatoren weitgehend unterdrücken.

In vorteilhafter Weise kann auch eine Quetschlichtquelle als Teilchequelle Verwendung finden. Die von ihr erzeugten Photonen sind ebenfalls paarweise miteinander korreliert.

Anstelle von Photonen ist auch die Verwendung von Atomen oder anderen Quantenteilchen möglich. In Analogie zur Lichtoptik sind auch für Atome "optische" Elemente bekannt welche die Eigenschaften eines Strahlteilers, Polarisators, Spiegels. Detektors etc. haben.

Eine besondere quantenmechanische Eigenschaft der Teilchen, die sich in einem quantenmechanisch verschränkten Zustand befinden, ist ihre Fähigkeit, wie Wellenamplituden miteinander als Teilchen zu interferieren. Obwohl die Gesamtintensitäten stets positiv sind, gibt es Anordnungen, bei denen sich die Intensitäten zweier Photonen oder sonstiger Quanten zu Null addieren, also weginterferieren. Diese Antikorrelationen verursachen wegen der Energieerhaltung das paarweise Auftreten der Photonen an anderer Stelle. Diese Eigenschaft wird erfindungsgemäß verwendet, um ein Teilchenpaar, bei dem die beiden Partner nicht kollinear sind, an einem Strahlteiler dazu zu bringen, den Strahlteiler stets als Pärchen in einem der beiden Ausgänge zu verlassen.

Nach der Erzeugung des Mehrteilchenzustands, insbesondere eines Photonenpaars, wird im Gegensatz zum Verfahren der DE 196 41 754.6 daher nicht eines der Teilchen in einen Triggerkanal eingekoppelt und detektiert, sondern beide bzw. alle Teilchen werden in i. a. verschiedene Eingangskanäle eines Strahlteilers eingekoppelt und am Strahlteiler zur Interferenz gebracht. Dazu sind teilchenabenkende Elemente vorgesehen, wie z.B. Spiegel, Prismen, Linsen und dergleichen, die in einem oder allen Teilstrahlengängen angeordnet sind. Die jeweiligen Teilstrahlengänge des Zufallsgenerators haben vorzugsweise etwa gleiche optische Länge, um sicherzustellen, daß die Teilchen am Strahlteiler miteinander interferieren können. Zur genauen Anpassung der Längen können Stellelemente vorgesehen sein, welche elektrisch ansteuerbar sind. Ebenso ist vorzugsweise in einem der Teilstrahlengänge eine variable Verzögerungsstrecke eingebracht, z.B. ein optischer Posaunenzug.

Weiterhin ist wenigstens ein teilchenbeeinflussendes Element vorgesehen, welches abstimmbar und in einen Teilstrahlengang eingebracht ist. Durch Abstimmen dieses Elements wird erfindungsgemäß erreicht, daß alle Teilchen am Strahlteiler in einen gemeinsamen Ausgangskanal des Strahlteilers überführt werden und somit auf den diesem Ausgangskanal zugeordneten Detektor treffen. Durch das im wesentlichen gleichzeitige Auftreffen von wenigstens zwei Teilchen wird die Ansprechwahrscheinlichkeit des Detektors erhöht.

Die Detektoren sind an die von der Teilchenquelle emittierten Teilchen angepaßt. Bei einem Zufallsgenerator auf optischer Grundlage sind die Detektoren Photodetektoren, die an die Wellenlänge angepaßt sind, z.B.

Infrarotdetektoren. Besonders vorteilhaft sind in diesem Fall EinzelphotonenDetektoren, insbesondere Avalanche-Dioden.

Vorzugsweise wird das teilchenbeeinflussende Element abgestimmt, indem die Koinzidenzen zwischen den Ausgängen des Strahlteilers - bzw. zwischen den den Ausgängen zugeordneten Detektoren - gemessen und minimiert werden. Denn ein Verschwinden von Koinzidenzen bedeutet bei in etwa gleicher Laufzeit der Teilchen in den Teilstrahlengängen, daß die Teilchen den Strahlteiler über einen gemeinsamen Ausgang verlassen. Es kann aber auch die zur Minimierung der Koinzidenzen führende Einstellung der in die Teilstrahlengänge eingebrachten Elemente berechnet und die Einstellung dementsprechend gewählt werden. Im letzteren Fall ist u. U. nur ein Nachjustieren der Apparatur zur tatsächlichen Minimierung der Koinzidenzen notwendig.

Vorzugsweise ist das teilchenbeeinflussende Element ein Interferometer, insbesondere ein Mach-Zehnder-Interferometer, ein Michelson-Interferometer oder ein Fabry-Perot-Interferometer oder ein Echelon. Das Interferometer kann auch ein linear doppelbrechender Kristall sein, vorzugsweise ein an die Wellenlänge des das Interferometer durchlaufenden Lichts angepaßtes $\lambda/2$-Plättchen. Zur Erhöhung der Gangdifferenz kann das Interferometer im letztgenannten Fall einen Kompensator umfassen, insbesondere einen Babinet-Soleil-Kompensator oder eine elektrisch abstimmbare Verzögerungsplatte wie Flüssigkristallzelle, Kerrzelle und dergleichen.

In einer vorteilhaften Ausgestaltung der Erfindung übertrifft der Gangunterschied des Interferometers die Kohärenzlänge der Photonen um ein Vielfaches. Dadurch werden Interferenzen des das Interferometer durchlaufenden Teilchens mit sich selbst vermieden. Die über die Interferometerarme gemittelte optische Weglänge des einen Teilstrahlengangs stimmt in dieser Ausgestaltung der Erfindung mit der optischen Weglänge des anderen Teilstrahlengangs im wesentlichen überein, und die Weglängendifferenz im Interferometer beträgt vorzugsweise ein ganzzahliges Vielfaches der mittleren Wellenlänge der von der Teilchenquelle emittierten Photonen. In diesem Fall ist die Wahrscheinlichkeit für Koinzidenzen zwischen den Ausgängen des Strahlteilers theoretisch Null, so daß in der Praxis ein Großteil aller Photonenpaaren den Strahlteiler räumlich als Paar verlassen, wodurch die Ansprechwahrscheinlichkeit des jeweiligen Detektors erhöht wird.

Ebenso wird bei korrekter Abstimmung der Elemente keines der Photonenpaare am Strahlteiler aufgetrennt. Damit wird verhindert, daß die Photonen eines Paars beide Detektoren zum Ansprechen bringen und somit Zählereignisse verursachen, die keinem eindeutigen Bitwert 0 oder 1 entsprechen. Um dennoch auftretendes Ansprechen beider Detektoren zu unterdrücken bzw. zur Erzeugung einer Zufallszahl zu verwerfen, ist vorzugsweise eine Antikoinzidenzschaltung vorgesehen, welche ein Zählereignis eines Detektors nur dann wertet, wenn der andere Detektor innerhalb eines bestimmten Zeitfensters kein Teilchen registriert hat.

Für den Fall, daß eine Quelle von Mehrphotonenanzahlzuständen zur Verfügung steht, wird der einzelne Zustand wiederum aufgeteilt und auf die beiden Eingänge des Strahlteilers fallengelassen. Durch die Teilcheninterferenz verlassen die Photonen den Strahlteiler alle in einem Ausgang und werden wie im Zweiteilchen-Fall detektiert. Je mehr Photonen den Strahlteiler in einem Arm verlassen und gleichzeitig detektiert werden, umso höher ist nach (1) die Zähleffizienz der Detektoren.

Kurzbeschreibung der Zeichnung, in der zeigen:

Figur 1a, 1b     die Erzeugung eines Photonenpaars durch parametrische Flu oreszenz an einem nichtlinearen Kristall vom Typ I bzw. II;

Figur 2     schematisch einen erfindungsgemäßen Zufallsgenerator;

Figur 3     einen weiteren Zufallsgenerator.

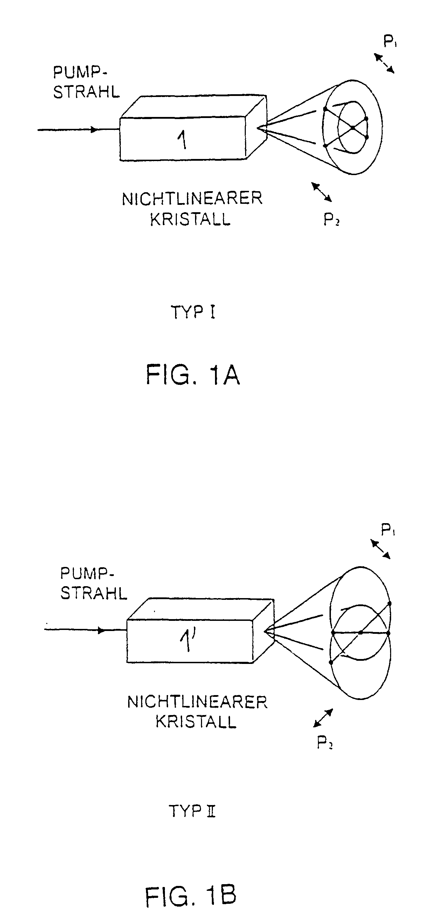

Figur 1 zeigt schematisch die Erzeugung eines quantenmechanisch korrelierten Photonenpaars durch parametrische Fluoreszenz. Dazu wird ein nichtlinearer Kristall 1 vom Typ I bzw. Kristall 1' vom Typ II mit einem Laserstrahl der Wellenlänge $\lambda_p$ und hoher Intensität gepumpt. Der Kristall muß dabei so geschnitten und relativ zum Anregungsstrahl orientiert sein, daß die sog. Phasenanpassungsbedingungen erfüllt sind. Im Kristall zerfällt ein Pumpphoton mit einer gewissen Wahrscheinlichkeit in zwei Fluoreszenzphotonen der Wellenlängen $\lambda_1$ und $\lambda_2$ wobei wegen der Energieerhaltung $\lambda_p = \lambda_1 + \lambda_2$ gilt. Sowohl $\lambda_1$ (und damit $\lambda_2$) als auch die Polarisation der beiden Fluoreszenzphotonen $P_1$, $P_2$ ist durch die Geometrie der Anordnung und des Kristalls festgelegt. Bei nichtlinearen Kristallen vom Typ I, Fig 1a, zerfällt ein Pump-Photon in zwei Fluoreszenzphotonen mit paralleler linearer Polarisation $P_1$ bzw. $P_2$, die in Raumrichtungen emittiert werden, welche von der Anregungsgeometrie, also insbesondere von der Orientierung des Pumpstrahls relativ zu den optischen Achsen des Kristalls, abhängen. Bei nichtlinearen Kristallen vom Typ II, Fig 1 b, werden entsprechend zwei zueinander orthogonal polarisierte Photonen erzeugt. Für gewisse Geometrien werden die beiden Photonen in die gleiche Richtung (kollinear) ermittelt.

Wege zur Ausführung der Erfindung:

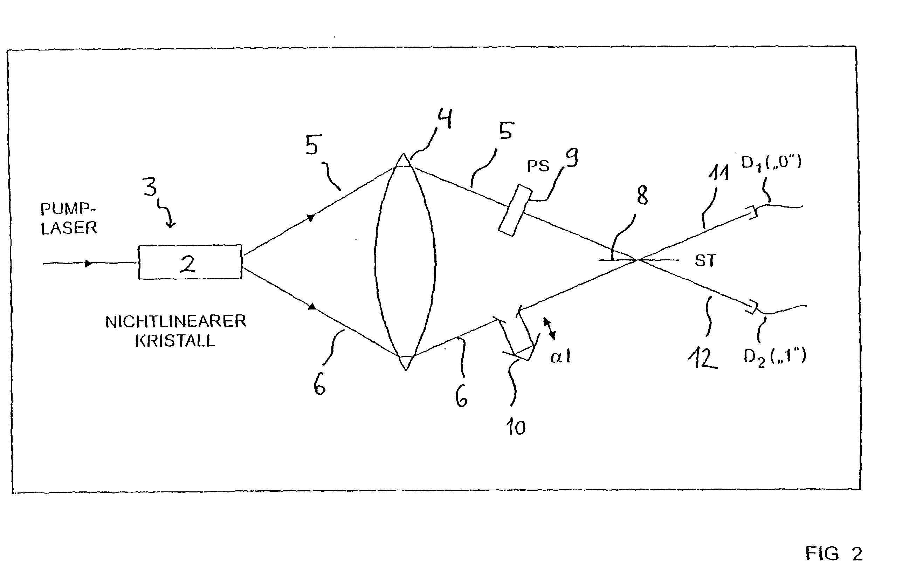

Figur 2 zeigt schematisch einen erfindungsgemäßen Zufallsgenerator. Der Zufallsgeneratorweist eine Teilchenquelle 3 für quantenoptisch korrelierte Photonenpaare auf. Diese Lichtquelle ist ein geeignet geschnittener und orientierter optisch nichtlinearer Kristall 2, welcher von einem Laserstrahl hoher Intensität und geeigneter Frequenz gepumpt wird. Durch parametrische Konversion der Pump-Photonen entstehen zwei Fluoreszenzstrahlen, welche den Kristall 2 in unterschiedliche Richtungen relativ zur Ausbreitungsrichtung des Pumpstrahls verlassen. Jeweils ein Photon des einen Strahls befindet sich mit einem anderen Photon des anderen Strahls in einem quantenmechanisch verschränktem Zustand.

Die die Photonenquelle 3 verlassenden Fluoreszenzphotonen werden als Teilstrahlen in die zwei Teilstrahlengänge 5, 6 des Zufallsgenerators eingekoppelt. Das Pumplicht wird durch hier nicht dargestellte spektrale Filter oder durch Blenden oder Masken vom weiteren Strahlengang ferngehalten. Die Teilstrahlengänge 5, 6 werden mittels eines teilchenablenkenden Elements, hier eine Linse 4, auf einem Strahlteiler 8 zusammengeführt. Der Strahlteiler hat vorzugsweise ein Teilungsverhältnis von 1:1, um gleiche Wahrscheinlichkeiten für die Wahl der Ausgänge 11, 12 des Strahlteilers und damit für den Bitwert 1 bzw. 0 zu realisieren. Am Ausgang oder am Eingang des Strahlteilers kann eine computergesteuert drehbare $\lambda/2$-Verzögerungsplatte oder ein elektrooptisches Verzögerungselement angeordnet sein, mit welchem sich toleranzbedingte Abweichungen im Teilungsverhältnis korrigieren lassen.

Im Teilstrahlengang 5 ist ein teilchenbeeinflussendes Element 9 angeordnet. Dieses ist im dargestellten Fall ein $\lambda/2$-Plättchen oder ein anderes Polarisationsstellelement PS, das im Falle der Typ II Geometrie dazu dient, die beiden Partner des Photonenpaars gleich zu polarisieren.

Im anderen Teilstrahlengang 6 ist eine variable Verzögerungsstrecke 10, hier ein optischer Posaunenzug PZ, angeordnet. Diese erlaubt es, eine variable Zeitdifferenz der Laufzeit zwischen den beiden Strahlen einzufügen. Die beiden Strahlen 5, 6 fallen auf den Strahlteiler 8 und anschließend auf die beiden Detektoren $D_1$ und $D_2$ des Zufallsgenerators. Jedem Ausgang 11, 12 des Strahlteilers ist dabei ein Detektor $D_1$ bzw. $D_2$ eindeutig zugeordnet. Der Detektor $D_1$ steht dabei für den Bitwert 0, der Detektor $D_2$ für den Bitwert 1 der Zufallssequenz.

Sind die Möglichkeiten der Photonen, am Strahlteiler entweder beide reflektiert oder beide transmittiert zu werden, ununterscheidbar, so interferieren die beiden Photonen so, daß sie den Strahlteiler stets als Pärchen im selben Ausgang 11 oder 12 verlassen und entweder beide auf den Detektor $D_1$ oder beide auf den Detektor $D_2$ fallen. Dazu muß der Posaunenzug 10 nur geeignet abgestimmt werden, was sich in einer Koinzidenzschaltung der Detektoren $D_1$ und $D_2$ leicht erreichen läßt. Im Abstimmungsfall verschwinden die Koinzidenzen.

Wie im Falle des gewöhnlichen optischen Zufallsgenerators wird dem Detektor $D_1$ die "0" und $D_2$ die "1" zugeordnet. Erfindungsgemäß fallen stets zwei Photonen auf einen Detektor, und die Effizienz ist nach (1) verbessert. Außerdem gibt es keine Fälle, in denen die Photonen des Photonenpaars aufgeteilt werden und sowohl $D_1$ als auch $D_2$ zum Ansprechen bringen. Dadurch erhöht sich die Zählwahrscheinlichkeit und die Geschwindigkeit des Aufbaus der Zufallssequenz, denn jedes der erzeugten Photonenpaare kann theoretisch ein Bit der Zufallssequenz definieren. Um möglicherweise dennoch auftretendes gleichzeitiges Ansprechen von $D_1$ und $D_2$ bzgl. der Generierung eines Bits zu unterdrücken, sind die Detektoren $D_1$ und $D_2$ vorzugsweise antikoinzident geschaltet.

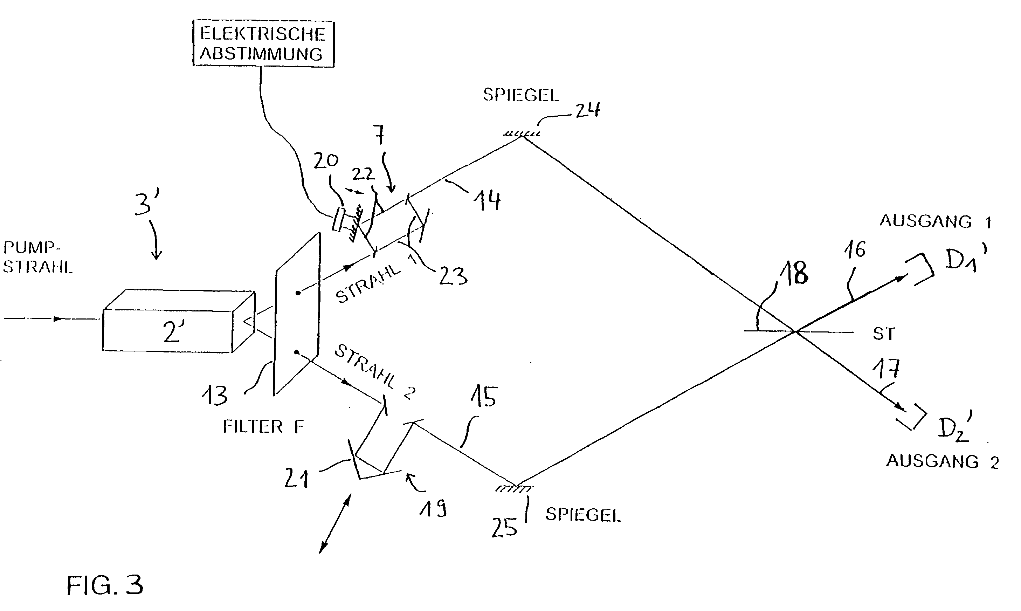

Figur 3 zeigt einen weiteren optischen Zufallsgenerator. Die Teilchenquelle 3' für quantenoptisch korrelierte Photonenpaare ist wie in Figur 2 ausgebildet und umfaßt einen optisch nichtlinearen Kristall 2', der von einem Laser gepumpt wird. Das Pumplicht wird mit einem Filter 13 unterdrückt. Dieses ist vorzugsweise ein optischer Bandpaßfilter, welcher für die Pumpwellenlänge undurchlässig ist, das Fluoreszenzlicht der Fluoreszenzwellenlängen $\lambda_1$ bzw. $\lambda_2$ jedoch transmittiert. Am Ausgang der Lichtquelle 3' kann weiterhin ein Filter angeordnet sein. welches die Intensität des Fluoreszenzlichts soweit reduziert, daß sich mit einer gewissen Wahrscheinlichkeit jeweils nur ein Photonenpaar in der Anordnung befindet.

Die quantenmechanisch korrelierten Fluoreszenzphotonen werden in jeweils einen Teilstrahlengang 14 bzw. 15 des Zufallsgenerators eingekoppelt. Durch Umlenkung über einen oder mehrere Spiegel 24, 25 werden die Teilstrahlengänge 14, 15 auf einem Strahlteiler 18 wieder zusammengeführt. Mit dem Strahlteiler 18 werden beide Teilstrahlengänge 14, 15 überlagert und in zwei separate Ausgangskanäle 16, 17 überführt.

In einem der Teilstrahlengänge 14 ist bei dieser Ausgestaltung der Erfindung ein Interferometer 7 angeordnet, welches hier ein Mach-Zehnder-Interferometer mit den Interferometerarmen 22 und 23 ist. Der Interferometerarm 22 hat die optische Länge $\delta l_F$, welche mit einem elektrisch ansteuerbaren Stellelement 20 abgestimmt werden kann. Der Interferometerarm 23 hat die feste Länge $\delta l_S$.

Im anderen Teilstrahlengang 15 befindet sich eine optische Verzögerungsstrecke 19, die hier ein optischer Posaunenzug ist. Die optische Länge $\delta l$ der Verzögerungsstrecke 19 ist mittels eines weiteren Stellelements 21 variabel. Dieses ist vorzugsweise wie das Stellelement 20 elektrisch ansteuerbar, wodurch die Länge $\delta l$ der Verzögerungsstrecke 19 ferngesteuert, z.B. computergesteuert, verändert werden kann.

Die optischen Längen der Teilstrahlengänge 14, 15 ohne Berücksichtigung der Längen der Interferometerarme 22, 23 bzw. der optischen Verzögerungsstrecke 19 sind vorzugsweise gleich. Für den Fall eines mit einem nichtlinearen Kristall vom Typ I erzeugten Photonenpaars gleicher Polarisation kann dann die Koinzidenzrate K für Koinzidenzen zwischen den Ausgängen 16, 17 wie folgt angegeben werden:

$$(2) \quad K = \tfrac{1}{2}\{1 - \tfrac{1}{2}\exp\left[-\tfrac{1}{c^2 a^2}\left(\delta l_F - \delta l\right)^2\right] - \tfrac{1}{2}\exp\left[-\tfrac{1}{c^2 a^2}\left(\delta l_S - \delta l\right)^2\right] +$$

$$\cos\left[\tfrac{\omega_0}{c}\left(\delta l_F - \delta l_S\right)\right]\cdot\left[\exp\left[-\tfrac{1}{4c^2 a^2}\left(\delta l_F - \delta l_S\right)^2\right] - \exp\left[-\tfrac{1}{c^2 a^2}\left(\tfrac{\delta l_F - \delta l_S}{2} - \delta l\right)^2\right]\right]\}$$

Hierbei sind $\delta l_F$, $\delta l_S$, $\delta l$ jeweils die optischen Wege in den Interferometerarmen 22, 23 bzw. in der Verzögerungsstrecke 19, c ist die Lichtgeschwindigkeit und a bestimmt die spektrale Breite des Spektrums der beiden Strahlen. Für beide Strahlen wurde eine Gauss-Verteilung

$$\exp\left[-a^2\left(\omega - \omega_0\right)^2\right]$$

mit der mittleren Frequenz $\omega_0$ und $\omega_1 + \omega_2 = 2\,\omega_0$ angenommen.

Im folgenden wird angenommen, daß die spektrale Breite der beiden Photonen 1/a so groß ist, daß der Gangunterschied $\delta l_F$ - $\delta l_S$ des Interferometers die Kohärenzlänge c·a der Photonen um ein Mehrfaches übertrifft. Weiterhin wird angenommen, daß die optischen Weglängen $\delta l_F$, $\delta l_S$ und $\delta l$ derart aufeinander abgestimmt sind, daß gilt $\delta l = 1/2$ ($\delta l_F + \delta l_S$ ). Dem steht selbstverständlich der Fall gleich, daß die gesamte optische Länge des Teilstrahlengangs 15 einschließlich der optischen Verzögerungsstrecke 19 mit der mittleren optischen Länge des Teilstrahlengangs 14 einschließlich der Länge der Interferometerarme 22, 23 übereinstimmt.

Der Zufallsgenerator ist daher vorzugsweise so abgestimmt, daß der Gangunterschied $\delta l_F$ - $\delta l_S$ des Interferometers 7 die Kohärenzlänge $c \cdot a$ der Photonen um ein Vielfaches übertrifft und die über die Interferometerarme 22, 23 gemittelte optische Weglänge des einen Teilstrahlengangs 14 mit der optischen Weglänge des anderen Teilstrahlengangs 15, einschließlich der Verzögerungsstrecke 19, im wesentlichen übereinstimmt. Falls das Interferometer durch einen linear doppelbrechender Kristall realisiert ist, umfaßtes vorzugsweise einen Kompensator zur Erweiterung des Gangunterschieds, insbesondere einen Babinet-Soleil-Kompensator oder eine elektrisch abstimmbare Verzögerungsplatte wie Flüssigkristallzelle, Kerrzelle und dergleichen.

Für diesen Fall $\delta l = 1/2$ ($\delta l_F + \delta l_S$) und $c \cdot a$ « $|\delta l_F$ - $\delta l_S|$ geht die Koinzidenzrate K über in

$$(3) \quad K \approx \tfrac{1}{2}\left\{1 - \cos\left[\tfrac{\omega_0}{c}\left(\delta l_F - \delta l_S\right)\right]\right\}$$

Falls

$$\cos\left[\tfrac{\omega_0}{c}\left(\delta l_F - \delta l_S\right)\right] = +1 ,$$

d.h. $\delta l_F$ -$\delta l_S$ = n $\frac{2\pi c}{\omega_0}$ = $n\lambda_0$ mit n= 0, 1, ..., gilt K=0. Dies bedeutet, daß beide Photonen den Strahlteiler in einem der Ausgänge 16, 17 zusammen als Paar verlassen und gemeinsam den dort angeordneten Detektor $D_1'$ bzw. $D_2'$ zum Ansprechen bringen. Dabei ist jedoch völlig ungewiß, welchen der Ausgänge sie nehmen. Dieser Elementarprozeß wird erfindungsgemäß zur Erzeugung der Zufallssequenz ausgenutzt, indem die in die Teilstrahlengänge eingebrachten optischen Elemente gemäß obiger Gleichung eingestellt werden, so daß K=0 gilt.

Auch in diesem Fall sind die Detektoren $D_1'$ und $D_2'$ vorzugsweise über eine Koinzidenz-/Antikoinzidenzschaltung miteinander verbunden, die Teil eder Auswerteelektronik ist, wobei die Koinzidenzschaltung zur Abstimmung des Zufallsgenerators und die Antikoinzidenzschaltung zur Unterdrückung von Fehlereignissen (Ansprechen beider Detektoren) dient.

Die Ausgangssignale der Detektoren $D_1'$ und $D_2'$ werden einer hier nicht dargestellten Auswerteelektronik zugeführt, die auch Teil einer Datenverarbeitungsanlage sein kann.

Gewerbliche Anwendbarkeit:

Die Erfindung ist in allen Bereichen, in denen zuverlässige Zufallszahlen erzeugt werden müssen, gewerblich anwendbar, insbesondere in der Telekommunikation zur Verbesserung von Kryptographieverfahren.

Liste der Bezugszeichen:

| | |
|---|---|
| 1, 1', 2, 2' | nichtlinearer Kristall |
| 3, 3' | Lichtquelle |
| 4 | Linse |
| 5, 6, 14, 15 | Teilstrahlengang |
| 7, 9 | teilchenbeeinflussendes Element: Interferometer bzw. Polarisationsstellelement |
| 8, 18 | Strahlteiler |
| 10, 19 | optische Verzögerungsstrecke (opt. Posaunenzug) |
| 11, 12, 16, 17 | Ausgangskanal (Strahlteiler) |
| 13 | Filter |
| 20, 21 | Stellelement |
| 22, 23 | Interferometerarm |
| 24, 25 | Spiegel |
| $D_1$, $D_1'$, $D_2$, $D_2'$ | Detektor |

## Patentansprüche

**1.** Verfahren zur Erzeugung einer Zufallszahl auf quantenmechanischer Grundlage, wobei der zufällige Prozeß der Wegwahl eines Teilchens an einem Strahlteiler (8, 18) und die Detektion eines Teilchens in einem der Ausgangskanäle (11, 12, 16, 17) des Strahlteilers (8, 18) zum Aufbau der Zufallssequenz herangezogen werden, indem einem Zählereignis an einem wenigstens zweier Detektoren ($D_1$, $D_1'$, $D_2$, $D_2'$) detektorspezifisch jeweils ein vorbestimmter Zahlenwert zugeordnet ist,
**dadurch gekennzeichnet, daß**

a) ein Mehrteilchenzustand mit wenigstens zwei quantenmechanisch korrelierten Teilchen erzeugt wird, wobei die einzelnen Teilchen in wenigstens teilweise unterschiedliche Raumrichtungen emittiert werden und somit unterschiedliche Teilstrahlengänge (5, 6) durchlaufen;
b) die Teilchen in die Eingangskanäle eines Strahlteilers (8, 18) eingekoppelt und am Strahlteiler (8, 18) zur Interferenz gebracht werden;
c) durch Abstimmen wenigstens eines in einen Teilstrahlengang (5, 6) eingebrachten teilchenbeeinflussenden Elements (7, 9) alle Teilchen am Strahlteiler (8, 18) in einen gemeinsamen Ausgangskanal (11, 12, 16, 17) des Strahlteilers (8, 18) überführt werden und auf den diesem Ausgangskanal (11, 12, 16, 17) zugeordneten Detektor ($D_1$, $D_1'$, $D_2$, $D_2'$) treffen;
d) und durch das im wesentlichen gleichzeitige Auftreffen von wenigstens zwei Teilchen die Ansprechwahrscheinlichkeit des Detektors ($D_1$, $D_1'$, $D_2$, $D_2'$) erhöht wird.

**2.** Verfahren nach Anspruch 1, **dadurch gekennzeichnet,**
**daß** es auf optischer Grundlage durchgeführt wird, die Teilchen Photonen sind, der Strahlteiler (8, 18) ein optischer Strahlteiler ist und die Detektoren Photodetektoren sind.

**3.** Verfahren nach Anspruch 2, **dadurch gekennzeichnet,**
**daß** der Mehrphotonenzustand durch parametrische Fluoreszenz erzeugt wird.

**4.** Verfahren nach einem der Ansprüche 1 bis 3, **dadurch gekennzeichnet,**
**daß** das teilchenbeeinflussende Element (7, 9) abgestimmt wird, indem die Koinzidenzen zwischen den Ausgängen (11, 12, 16, 17) des Strahlteilers (8, 18) gemessen und minimiert werden.

**5.** Zufallsgenerator zur Erzeugung einer mehrstelligen Zufallszahl, insbesondere zur Durchführung des Verfahrens nach einem der vorangegangenen Ansprüche, umfassend eine Teilchenquelle (3, 3') und einen Strahlteiler (8, 18), die so angeordnet sind, daß die von der Teilchenquelle (3, 3') emittierten Teilchen auf den Strahlteiler treffen, und wenigstens zwei Detektoren ($D_1$, $D_1'$, $D_2$, $D_2'$), die von der Teilchenquelle (3, 3') emittierte Teilchen zu detektieren imstande sind und jeweils einem Ausgang (11, 12, 16, 17) des Strahlteilers (8, 18) zugeordnet sind, wobei einem

**EP 1 029 394 B1**

Zählereignis an einem der Detektoren ($D_1$, $D_1'$, $D_2$, $D_2'$) detektorspezifisch jeweils ein vorbestimmter Zahlenwert zugeordnet ist, der von einer Erfassungseinrichtung erfaßt wird und zum Aufbau der Zufallssequenz dient, **dadurch gekennzeichnet, daß**

a) die Teilchenquelle (3, 3') eine Mehrteilchenquelle ist, welche mindestens zwei Teilchen, die sich in einem quantenmechanisch korrelierten Zustand befinden, im wesentlichen gleichzeitig zu emittieren imstande ist,
b) wenigstens ein teilchenablenkendes Element (4, 24, 25) vorgesehen ist, mit welchem die von der Teilchenquelle (3, 3') emittierten Teilchen auf die Eingänge des Strahlteilers (8, 18) geführt werden,
c) wenigstens ein teilchenbeeinflussendes Element (7, 9) vorgesehen ist, welches im Bereich zwischen der Teilchenquelle (3, 3') und dem Strahlteiler (8, 18) in den Strahlengang (5, 6, 14, 15) wenigstens eines der von der Teilchenquelle (3, 3') emittierten Teilchens eingebracht ist,
d) das teilchenbeeinflussende Element (7, 9) derart abgestimmt ist, daß alle Teilchen am Strahlteiler (8, 18) in einen gemeinsamen Ausgangskanal (11, 12, 16, 17) des Strahlteilers (8, 18) überführt werden und auf den diesem Ausgangskanal (11, 12, 16, 17) zugeordneten Detektor ($D_1$, $D_1'$, $D_2$, $D_2'$) treffen.

6. Zufallsgenerator nach Anspruch 5, **dadurch gekennzeichnet,**
**daß** die Mehrteilchenquelle (3, 3') eine Zweiphotonenquelle ist, welche einen optisch nichtlinearen Kristall (1, 1', 2, 2') umfaßt, der von einer Pumplichtquelle, insbesondere einem Laser, gepumpt wird.

7. Zufallsgenerator nach Anspruch 5, **dadurch gekennzeichnet,**
**daß** die Mehrteilchenquelle (3, 3') eine Quetschlichtquelle ist.

8. Zufallsgenerator nach einem der Ansprüche 5 bis 7, **dadurch gekennzeichnet,**
**daß** das in einem Teilstrahlengang (5) angeordnete teilchenbeeinflussende Element ein Interferometer (7) ist.

9. Zufallsgenerator nach Anspruch 8, **dadurch gekennzeichnet,**
**daß** das Interferometer (7) ein Mach-Zehnder-Interferometer, ein Michelson-Interferometer oder ein Fabry-Perot-Interferometer oder ein Echelon ist.

10. Zufallsgenerator nach Anspruch 8, **dadurch gekennzeichnet,**
**daß** das Interferometer (7) ein linear doppelbrechender Kristall ist, vorzugsweise ein an die Wellenlänge des das Interferometer durchlaufenden Lichts angepaßtes λ/2-Plättchen.

11. Zufallsgenerator nach einem der Ansprüche 8 bis 10, **dadurch gekennzeichnet,**
**daß** das Interferometer (7) einen Kompensator umfaßt, insbesondere einen Babinet-Soleil-Kompensator oder eine elektrisch abstimmbare Verzögerungsplatte wie Flüssigkristallzelle, Kerrzelle und dergleichen.

12. Zufallsgenerator nach einem der Ansprüche 8 bis 11, **dadurch gekennzeichnet,**
**daß** der Gangunterschied des Interferometers (7) die Kohärenzlänge der Photonen um ein Vielfaches übertrifft, die über die Interferometerarme (22, 23) gemittelte optische Weglänge des einen Teilstrahlengangs (5, 14) mit der optischen Weglänge des anderen Teilstrahlengangs (6, 15) im wesentlichen übereinstimmt und die Weglängendifferenz im Interferometer (7) vorzugsweise ein ganzzahliges Vielfaches der mittleren Wellenlänge der von der Teilchenquelle emittierten Photonen beträgt.

13. Zufallsgenerator nach einem der Ansprüche 8 bis 12, **dadurch gekennzeichnet,**
**daß** der andere Teilstrahlengang (6, 15) eine variable optische Verzögerungsstrecke (10, 19) enthält, insbesondere einen optischen Posaunenzug, welche vorzugsweise mittels eines elektrisch ansteuerbaren Stellelements (21) abstimmbar ist.

14. Zufallsgenerator nach einem der Ansprüche 5 bis 13, **dadurch gekennzeichnet,**
**daß** die Detektoren ($D_1$, $D_1'$, $D_2$, $D_2'$) Einzelphotonendetektoren sind, die z. B. Avalanche-Dioden umfassen.

**Claims**

1. Method for generating a random number on a quantum-mechanical basis, the random process of selecting the path of a particle at a beam splitter (8, 18) and the detection of a particle in one of the output channels (11, 12, 16, 17) of the beam splitter (8, 18) being used to construct the random sequence by virtue of the fact that a predetermined numerical value is assigned in a detector-specific fashion in each case to a counter event at one of at least two detectors (D$_1$, D$_1$', D$_2$, D$_2$'), **characterized in that**

a) a multiparticle state with at least two quantum-mechanically correlated particles is generated, the individual particles being emitted in at least partially different spatial directions, and therefore traversing different component beam paths (5, 6);

b) the particles are coupled into the input channels of a beam splitter (8, 18) and brought to interference at the beam splitter (8, 18);

c) by tuning at least one particle-influencing element (7, 9) inserted into a component beam path (5, 6), all the particles at the beam splitter (8, 18) are transferred into a common output channel (11, 12, 16, 17) of the beam splitter (8, 18) and impinge on the detector (D$_1$, D$_1$', D$_2$, D$_2$') assigned to this output channel (11, 12, 16, 17);

d) and the response probability of the detector (D$_1$, D$_1$', D$_2$, D$_2$') is raised by the substantially simultaneous impingement of at least two particles.

2. Method according to Claim 1, **characterized in that** it is carried out on an optical basis, the particles are photons, the beam splitter (8, 18) is an optical beam splitter, and the detectors are photodetectors.

3. Method according to Claim 2, **characterized in that** the multiphoton state is generated by parametric fluorescence.

4. Method according to one of Claims 1 to 3, **characterized in that** the particle-influencing element (7, 9) is tuned by measuring and minimizing the coincidences between the outputs (11, 12, 16, 17) of the beam splitter (8, 18).

5. Random number generator for generating a multidigit random number, in particular for carrying out the method according to one of the preceding claims, comprising a particle source (3, 3') and a beam splitter (8, 18) which are arranged such that the particles emitted by the particle source (3, 3') impinge on the beam splitter, and at least two detectors (D$_1$, D$_1$', D$_2$, D$_2$'), which are capable of detecting particles emitted by the particle source (3, 3') and are assigned in each case to an output (11, 12, 16, 17) of the beam splitter (8, 18), there being assigned in a detector-specific fashion in each case to a counter event at one of the detectors (D$_1$, D$_1$', D$_2$, D$_2$') a predetermined numerical value which is acquired by an acquisition device and serves to construct the random sequence, **characterized in that**

a) the particle source (3, 3') is a multiparticle source which is capable of emitting substantially simultaneously at least two particles which are in a quantum-mechanically correlated state,

b) at least one particle-deflecting element (4, 24, 25) is provided, with the aid of which the particles emitted by the particle source (3, 3') are guided to the inputs of the beam splitter (8, 18),

c) at least one particle-influencing element (7, 9) is provided which is inserted, in the region between the particle source (3, 3') and the beam splitter (8, 18), into the beam path (5, 6, 14, 15) of at least one of the particles emitted by the particle source (3, 3'), and

d) the particle-influencing element (7, 9) is tuned in such a way that all the particles at the beam splitter (8, 18) are transferred into a common output channel (11, 12, 16, 17) of the beam splitter (8, 18) and impinge on the detector (D$_1$, D$_1$', D$_2$, D$_2$') assigned to this output channel (11, 12, 16, 17).

6. Random number generator according to Claim 5, **characterized in that** the multiparticle source (3, 3') is a two-photon source which comprises an optically nonlinear crystal (1, 1', 2, 2') which is pumped by a pumping light source, in particular a laser.

7. Random number generator according to Claim 5, **characterized in that** the multiparticle source (3, 3') is a pinched light source.

8. Random number generator according to one of Claims 5 to 7, **characterized in that** the particle-influencing element arranged in a component beam path (5) is an interferometer (7).

9. Random number generator according to Claim 8, **characterized in that** the interferometer (7) is a Mach-Zehnder interferometer, a Michelson interferometer or a Fabry-Perot interferometer or an echelon.

10. Random number generator according to Claim 8, **characterized in that** the interferometer (7) is a linearly bire-fringent crystal, preferably a $\lambda/2$ plate adapted to the wavelength of the light traversing the interferometer.

**EP 1 029 394 B1**

11. Random number generator according to one of Claims 8 to 10, **characterized in that** the interferometer (7) comprises a compensator, in particular a Babinet-Soleil compensator, or an electrically tunable delay plate such as a liquid crystal cell, Kerr cell and the like.

12. Random number generator according to one of Claims 8 to 11, **characterized in that** the path difference of the interferometer (7) exceeds the coherence length of the photons by a multiple, the optical path length, averaged over the interferometer arms (22, 23), of one component beam path (5, 14) substantially corresponds to the optical path length of the other component beam path (6, 15), and the wavelength difference in the interferometer (7) is preferably an integral multiple of the average wavelength of the photons emitted by the particle source.

13. Random number generator according to one of Claims 8 to 12, **characterized in that** the other component beam path (6, 15) contains a variable optical delay distance (10, 19), in particular an optical trombone slide, which can preferably be tuned by means of an electrically drivable control element (21).

14. Random number generator according to one of Claims 5 to 13, **characterized in that** the detectors ($D_1$, $D_1$', $D_2$, $D_2$') are single-photon detectors which comprise avalanche diodes, for example.

**Revendications**

1. Procédé pour générer un nombre aléatoire selon un principe de mécanique quantique, le procédé aléatoire de sélection du chemin d'une particule sur un fractionneur de rayon (8, 18) et la détection d'une particule dans l'un des canaux de sortie (11, 12, 16, 17) du fractionneur de rayon (8, 18) étant utilisé pour constituer la séquence aléatoire en affectant à un événement de comptage survenant sur un d'au moins deux détecteurs ($D_1$, $D_1$', $D_2$, $D_2$') une valeur de comptage spécifique à chaque détecteur, **caractérisé en ce que**

   a) un état de particules multiples est généré avec au moins deux particules corrélées par mécanique quantique, chacune des particules étant émise dans des directions spatiales au moins partiellement différentes et parcourt ainsi des trajets de rayon partiel différents (5, 6) ;
   b) les particules sont injectées dans les canaux d'entrée d'un fractionneur de rayon (8, 18) et amenée en interférence au niveau du fractionneur de rayon (8, 18) ;
   c) toutes les particules au niveau du fractionneur de rayon (8, 18) sont transférées dans un canal de sortie commun (11, 12, 16, 17) du fractionneur de rayon (8, 18) en accordant au moins un élément (7, 9) influençant les particules inséré dans le trajet de rayon partiel (5, 6) et rencontrent un détecteur ($D_1$, $D_1$', $D_2$, $D_2$') associé à ce canal de sortie (11, 12, 16, 17) ;
   d) et la probabilité de réaction du détecteur ($D_1$, $D_1$', $D_2$, $D_2$') est augmentée par la rencontre quasiment simultanée d'au moins deux particules.

2. Procédé selon la revendication 1, **caractérisé en ce qu'**il est réalisé selon un principe optique, que les particules sont des photons, le fractionneur de rayon (8, 18) est une lame séparatrice et les détecteurs sont des photodétecteurs.

3. Procédé selon la revendication 2, **caractérisé en ce que** l'état de photons multiples est généré par fluorescence paramétrique.

4. Procédé selon l'une des revendications 1 à 3, **caractérisé en ce que** l'élément influençant les particules (7, 9) est accordé en mesurant et en minimisant la coïncidence entre les sorties (11, 12, 16, 17) du fractionneur de rayon (8, 18).

5. Générateur aléatoire destiné à générer un nombre aléatoire à plusieurs chiffres, plus particulièrement pour accomplir le procédé selon l'une des revendications précédentes, comprenant une source de particules (3, 3') et un fractionneur de rayon (8, 18) qui sont disposés de manière à ce que les particules émises par la source de particules (3, 3') rencontrent le fractionneur de rayon et au moins deux détecteurs ($D_1$, $D_1$', $D_2$, $D_2$') qui sont capables de détecter les particules émises par la source de particules (3, 3') et qui sont chacun associés à une sortie (11, 12, 16, 17) du fractionneur de rayon (8, 18), un événement de comptage survenant sur l'un des détecteurs ($D_1$, $D_1$', $D_2$, $D_2$') étant à chaque fois associés à une valeur de comptage prédéfinie spécifique au détecteur, laquelle est détectée par un dispositif de détection et sert à constituer la séquence aléatoire, **caractérisé en ce que**

a) la source de particules (3, 3') est une source de particules multiples qui est capable d'émettre quasi-simultanément au moins deux particules qui se trouvent dans un état de corrélation par mécanique quantique ;

b) au moins un élément (4, 24, 25) déviant les particules est prévu, avec lequel les particules émises par la source de particules (3, 3') sont acheminées sur les entrées du fractionneur de rayon (8, 18) ;

c) au moins un élément influençant les particules (7, 9) est prévu, lequel est disposé dans la zone entre la source de particules (3, 3') et le fractionneur de rayon (8, 18) dans le trajet de rayon (5, 6, 14, 15) d'au moins une particule émise par la source de particules (3, 3') ;

d) l'élément influençant les particules (7, 9) est accordé de telle manière que toutes les particules sur le fractionneur de rayon (8, 18) sont transférées dans un canal de sortie commun (11, 12, 16, 17) du fractionneur de rayon (8, 18) et viennent rencontrer un détecteur ($D_1$, $D_1'$, $D_2$, $D_2'$) associé à ce canal de sortie (11, 12, 16, 17).

6. Générateur aléatoire selon la revendication 5, **caractérisé en ce que** la source de particules multiples (3, 3') est une source de deux photons qui comprend un cristal optique non linéaire (1, 1', 2, 2') qui est pompé par une source de lumière de pompage, plus particulièrement un laser.

7. Générateur aléatoire selon la revendication 5, **caractérisé en ce que** la source de particules multiples (3, 3') est une source de lumière condensée.

8. Générateur aléatoire selon l'une des revendications 5 à 7, **caractérisé en ce que** l'élément influençant les particules disposé dans un trajet de rayon partiel (5) est un interféromètre (7).

9. Générateur aléatoire selon la revendication 8, **caractérisé en ce que** l'interféromètre (7) est un interféromètre de Mach-Zehnder, un interféromètre de Michelson ou un interféromètre de Fabry-Perot ou alors un échelon.

10. Générateur aléatoire selon la revendication 8, **caractérisé en ce que** l'interféromètre (7) est un cristal linéaire biréfringent, de préférence une plaquette $\lambda/2$ accordée sur la longueur d'onde de la lumière qui traverse l'interféromètre.

11. Générateur aléatoire selon l'une des revendications 8 à 10, **caractérisé en ce que** l'interféromètre (7) comprend un compensateur, plus particulièrement un compensateur de Babinet-Soleil ou une plaque de retard à réglage électrique telle qu'une cellule de cristal liquide, une cellule Kerr ou similaire.

12. Générateur aléatoire selon l'une des revendications 8 à 11, **caractérisé en ce que** la différence de trajet de l'interféromètre (7) est un multiple supérieur à la longueur de cohérence des photons, la longueur du trajet optique moyennée sur les bras de l'interféromètre (22, 23) du trajet du rayon partiel (5, 14) correspond pour l'essentiel à la longueur du trajet optique de l'autre trajet du rayon partiel (6, 15) et la différence de longueur d'onde dans l'interféromètre (7) est de préférence un multiple entier de la longueur d'onde moyenne des photons émis par la source de particules.

13. Générateur aléatoire selon l'une des revendications 8 à 12, **caractérisé en ce que** l'autre trajet de rayon partiel (6, 15) comprend un trajet de retard optique variable (10, 19), pus particulièrement un train de trombone optique qui peut être accordé de préférence à l'aide d'un élément de réglage (21) à commande électrique.

14. Générateur aléatoire selon l'une des revendications 5 à 13, **caractérisé en ce que** les détecteurs ($D_1$, $D_1'$, $D_2$, $D_2'$) sont des détecteurs de photons uniques qui comprennent, par exemple, des diodes à avalanche.

PUMP-
STRAHL

NICHTLINEARER
KRISTALL

P₁

P₂

TYP I

FIG. 1A

PUMP-
STRAHL

NICHTLINEARER
KRISTALL

P₁

P₂

TYP II

FIG. 1B

EP 1 029 394 B1

PUMP-
LASER

3

2

NICHTLINEARER
KRISTALL

5

4

5

PS 9

6

6

10

αl

8

11 $D_1$ („0")

ST

12 $D_2$ („1")

FIG 2

FIG. 3

ELEKTRISCHE ABSTIMMUNG

SPIEGEL 24

AUSGANG 1

PUMP-STRAHL

FILTER F

STRAHL 1

STRAHL 2

SPIEGEL 25

AUSGANG 2

ST

EP 1 029 394 B1